# FASCICULE DE BREVET EUROPEEN

(11) **EP 0 597 755 B1**
(45) Date de publication et mention de la délivrance du brevet: **09.07.1997**
(21) Numéro de dépôt: 93402695.6
(22) Date de dépôt: 03.11.1993
(51) Int. Cl.: C08K 3/30

(54) **Utilisation comme charge pour polymères de chaux sulfatée provenant de la désulfuration par voie sèche de fumées**
Verwendung als Polymerfüllstoff von sulfatiertem Kalk, erhalten bei der Trocken-Rauchgasentschwefelung
Use of sulfated chalk, obtained by the dry-flue gas desulphurisation as polymer charge

(30) Priorité: 10.11.1992 FR 9213532
(43) Date de publication de la demande: 18.05.1994
(73) Titulaire: TOTAL RAFFINAGE DISTRIBUTION S.A., 92800 Puteaux (FR)
(72) Inventeur: Castel, Claude, F-76600 Le Havre (FR)
(74) Mandataire: Jolly, Jean-Pierre

(56) Documents cités:
- DE-A- 2 119 959
- FR-A- 2 588 851

## Description

La présente invention concerne l'utilisation comme charge pour élastomères vulcanisables de chaux sulfatée provenant de la désulfuration par voie sèche de fumées.

On sait que l'utilisation de combustibles contenant des composés soufrés nécessite une épuration des fumées produites, avant leur rejet à l'atmosphère, afin d'éliminer de ces fumées les oxydes de soufre qu'elles contiennent.

Divers moyens ont été proposés dans ce but dans la technique et, parmi les procédés de désulfuration actuellement utilisés, figurent ceux utilisant la mise en contact des fumées avec des particules d'un matériau absorbant, dans lequel est présent au moins un composé basique d'un métal alcalino-terreux (voir, par exemple, FR-A-2 636 720). Les absorbants les plus fréquemment utilisés sont notamment les calcaires (Ca CO₃), la chaux éteinte (Ca (OH)₂) et les dolomies (Ca Mg (CO₃)₂). Les particules d'absorbant ont habituellement une granulométrie de 1 à 100 microns.

La désulfuration des fumées s'effectue à une température élevée supérieure à 700°C et, à cette température, les composés ci-dessus sont transformés au moins en partie en chaux vive, par élimination d'eau et de dioxyde de carbone.

Au contact des fumées, les particules de chaux vive réagissent avec les oxydes de soufre présents pour former du sulfate de calcium et, après utilisation, elles présentent une teneur élevée en ce composé.

Ce sont ces particules à forte teneur en sulfate de calcium, provenant de la désulfuration de fumées, que l'on désignera par le terme "chaux sulfatée" dans la présente description et dans les revendications annexées.

Les chaux sulfatées comprennent habituellement, en % en poids, de 40 à 80% de sulfate de calcium, Ca SO₄, et de 10 à 50% de chaux vive, Ca O, le reste étant constitué essentiellement de 0 à 10% de carbonate de calcium, Ca CO₃, et de 0 à 15% en poids de chaux éteinte, Ca (OH)₂. Bien entendu, il ne s'agit là que de compositions moyennes et des chaux sulfatées ayant des compositions différentes peuvent être utilisées dans le cadre de l'invention.

Ces chaux sulfatées ont habituellement une masse volumique apparente comprise entre 0,35 et 0,80 g/cm³. Leur granulométrie est usuellement comprise entre 1 et 100. 10⁻⁶ m et leur granulométrie moyenne entre 2 et 40. 10⁻⁶ m.

L'utilisation à grande échelle pour la désulfuration des fumées de ce type de composés absorbants peut conduire à une production annuelle d'une dizaine de milliers de tonnes de chaux sulfatée par unité de désulfuration, et cette chaux sulfatée est donc disponible.

La Demanderesse s'est de longue date attachée à l'étude d'une possible utilisation de ces sous-produits de la désulfuration et elle a établi que la chaux sulfatée provenant de la désulfuration des fumées peut être substituée de façon inattendue avec avantage aux charges incorporées dans les élastomères vulcanisables.

Il est connu, en effet, d'incorporer diverses charges pulvérulentes dans des polymères tels que le polychlorure de vinyle et, plus particulièrement, dans des élastomères tels que les caoutchoucs naturel ou synthétique. On distingue habituellement les charges dites inertes, qui visent simplement à diminuer dans une formulation la quantité de polymère utilisée, en y incorporant un produit bon marché, de la craie par exemple, et les charges dites renforçantes ou semi-renforçantes, qui modifient les propriétés du polymère. Dans ce dernier type de charges, on mentionnera le noir de carbone, la silice précipitée et le kaolin, qui, incorporés par exemple dans des élastomères, leur permettant de répondre à certaines spécifications industrielles.

DE-A-2 119 959 décrit une composition de polymère thermoplastique comprenant, comme charge dispersée, des particules de sulfate de calcium et de carbonate de calcium, en une quantité supérieure à 50% en poids de la composition.

WO-A-91 01349 décrit un polychlorure de vinyle comprenant, comme charge dispersée, des particules de sulfate de calcium provenant, en particulier, de la désulfuration des fumées. Le sulfate de calcium peut représenter jusqu'à 80 parties en poids pour 100 parties en poids de polymère.

Les travaux effectués par la Demanderesse lui ont permis d'établir que la chaux sulfatée non seulement peut être utilisée pour une telle application, mais que, substituée à des charges dites inertes, dans certains élastomères, elle a des effets appréciables sur certaines propriétés des élastomères vulcanisables.

Un premier but de l'invention est donc de valoriser la chaux sulfatée provenant de la désulfuration des fumées en l'utilisant comme charge pour des élastomères vulcanisables.

Un autre but de l'invention est de substituer aux charges inertes pour élastomères vulcanisables de la technique antérieure de la chaux sulfatée, dont le coût est en général inférieur et dont l'emploi se traduit par des effets bénéfiques sur les propriétés de certains polymères.

L'invention a par conséquent pour objet l'utilisation comme charge, dans une composition d'élastomère vulcanisable, d'une chaux sulfatée provenant de la désulfuration par voie sèche des fumées et comprenant en % en poids, entre 40 et 80% de sulfate de calcium, entre 10 et 50% de chaux vive, entre 0 et 10% de carbonate de calcium et entre 0 et 15% de chaux éteinte, sa granulométrie étant comprise entre 1 et 100. 10⁻⁶ m et sa granulométrie moyenne entre 2 et 40. 10⁻⁶ m, tandis que sa masse volumique apparente est comprise entre 0,35 et 0,80 g/cm³.

Il est entendu qu'avec la chaux sulfatée, on peut utiliser en combinaison d'autres charges telles que le noir de carbone, la silice, le kaolin, sans pour autant sortir du cadre de l'invention.

Les compositions d'élastomère vulcanisées contenant comme charge de la chaux sulfatée constituent un autre objet de l'invention.

Il résulte, en effet, des études de la Demanderesse, que les particules de chaux sulfatée se dispersent de façon homogène et en quantité importante dans les élastomères avec lesquels on emploie usuellement des charges inertes. De plus, la chaux sulfatée altère les caractéristiques physico-chimiques de ces polymères de façon moins importante que les charges habituellement utilisées.

La chaux sulfatée sera incorporée dans le polymère en une quantité de 100 à 1000 parties en poids pour 100 parties d'élastomère, selon la nature de l'élastomère.

La Demanderesse a établi que la présence de la chaux sulfatée dans la composition d'élastomère vulcanisable accroît la vitesse de vulcanisation de cet élastomère, en présence des additifs usuels de vulcanisation et dans des conditions usuelles de vulcanisation. Elle améliore en outre les propriétés élastiques de l'élastomère, sans altérer ses autres propriétés physiques.

Les effets avantageux de cette chaux sulfatée se manifestent de façon particulièrement sensible lorsqu'elle est incorporée dans de l'éthylène propylène diène monomère (EPDM) ou dans du caoutchouc styrène butadiène (SBR).

Cette incorporation de la chaux sulfatée dans des élastomères va être décrit plus en détail ci-après.

On rappelle qu'une composition de caoutchouc comprend habituellement une gomme de base (par exemple, un EPDM ou un SBR), une ou plusieurs charge(s), un plastifiant, un agent de vulcanisation (du soufre, par exemple), un ou plusieurs activateur(s) de vulcanisation (oxyde de zinc et/ou acide stéarique) et un ou plusieurs accélérateur(s) de vulcanisation. La charge a de préférence une granulométrie inférieure à 100. 10⁻⁶ m, une faible teneur en eau, et un pH de préférence basique.

La faisabilité de tels mélanges dépend de la quantité de charge incorporée et de la quantité de plastifiant, car, si la quantité relative de plastifiant est trop importante, le produit obtenu a la consistance d'un mastic, tandis que, si la quantité de charge est trop élevée, on obtient un produit pulvérulent.

Dans tous les essais qui seront rapportés ci-après, on a utilisé :
- comme gomme : l'EPDM commercialisé par la Société SOCABU, contenant environ 9% de 5- éthylidène -2- norbor- nène, environ 52% d'éthylène, et 39% de propylène environ, qui présente une viscosité MOONEY ML (1 + 8) à 125°C de 82 ± 5, et qui possède une bonne cohésion à cru, une bonne tenue à froid et une bonne extrudabilité ;
- comme plastifiant : une huile paraffinique, commercialisée sous l'appellation PLAXENE 6110, par TOTAL;
- comme agent de vulcanisation : du soufre;
- comme activateur de vulcanisation : conjointement, de l'oxyde de zinc et de l'acide stéarique ;
- comme accélérateur de vulcanisation : le produit commercialisé sous l'appellation VULCAFOR 2 par la Société VULNAX ;
- comme lubrifiant éventuel : du stéarate de zinc.

La chaux sulfatée CS1 utilisée dans ces exemples présente les caractéristiques suivantes :
- composition (en % en masse) :
   * H₂O : 0,3,
   * Ca CO₃ : 3,3,
   * Ca SO₄ : 48,6,
   * Ca(OH)₂ : 6,6,
   * Ca O : 41,2,
- masse volumique apparente : 0,41 g/cm³,
- granulométrie : 2 à 30. 10⁻⁶ m,
- diamètre médian : 9. 10⁻⁶ m.

Dans les essais, les duretés, exprimées en degrés INTERNATIONAL SHORE A, ont été déterminées conformément à la norme AFNOR 46003.

Les courbes rhéométriques ont été dressées à l'aide d'un rhéomètre de la marque MONSANTO, conformément à la norme AFNOR 43015.

La résistance à la rupture et l'allongement ont été déterminés conformément à la norme AFNOR 46002.

Les résultats obtenus avec l'EPDM peuvent être, avec des formules appropriées, transposés au SBR.

### EXEMPLE 1

Dans cet exemple, on se propose de comparer les propriétés de compositions noires, chargées avec une charge renforçante de noir de carbone (noir FEF - Norme ASTM N 550) et comprenant respectivement :
- Composition A : de la chaux sulfatée;
- Composition B : une craie de très bonne qualité du commerce, commercialisée par la Société OMYA, sous l'appellation craie OMYA BSH (Blanc Spécial Hydrophobe);
- Composition C : une craie témoin du commerce, commercialisée par la Société OMYA, sous l'appellation Craie OMYA Violette.

Les teneurs des compositions en leurs différents constituants et leurs propriétés sont rassemblées dans le Tableau I ci-après.

**TABLEAU I**

| Composition | A | B* | C* |
|---|---|---|---|
| EPDM | 100 | 100 | 100 |
| Noir FEF | 70 | 70 | 70 |
| Chaux sulfatée CS1 | 80 | - | - |
| Craie Omya BSH (Hydrophobe) | - | 80 | - |
| Craie Omya Violette | - | - | 80 |
| Plaxene 6110 | 50 | 50 | 50 |
| ZnO | 5 | 5 | 5 |
| Acide Stéarique | 1 | 1 | 1 |
| Soufre | 2 | 2 | 2 |
| Vulcafor 2 | 5 | 5 | 5 |

| Propriétés | | | |
|---|---|---|---|
| | | | |
| Temps de Vulcanisation Rhéomètre T90,(180°C) | 3mn 30s | 4mn 04s | 3mn 04s |
| Courbe Vulcanisation | | | |
| Couple Mini (en Nm) | 10 | 9,5 | 12 |
| Couple Maxi | 83 | 76 | 68 |
| Résistance rupture (MPa) | 8,8 | 9,7 | 7,1 |
| Allongement rupture (%) | 400 | 320 | 270 |
| Module 100% (MPa) | 2,4 | 2,6 | 2,6 |
| Module 300% (MPa) | 6,6 | 8,4 | - |
| Dureté Internationale | 64 | 63 | 66 |

| | | | |
|---|---|---|---|
| * Comparatif | | | |

Les résultats de ce Tableau font ressortir qu'à dureté sensiblement égale (64-66° Shore), la chaux sulfatée, substituée dans la Composition A aux craies du commerce, accroit l'allongement à la rupture de la composition d'élastomère, dont la résistance à la rupture demeure proche de celle contenant la craie de meilleure qualité (composition B).

### EXEMPLE 2

Dans cet exemple, on se propose de comparer les propriétés d'une composition claire, comprenant une charge renforçante claire constituée par du kaolin de bonne qualité, commercialisé sous l'appellation WHITETEX n°2 (Composition D) et comprenant éventuellement une charge additionnelle de chaux sulfatée (Composition E), de Craie OMYA BSH (Composition F) et de Craie OMYA Violette (Composition G).

La constitution de ces compositions et leurs propriétés sont rassemblées dans le Tableau II ci-après.

**TABLEAU II**

| COMPOSITION | D* | E | F* | G* |
|---|---|---|---|---|
| EPDM | 100 | 100 | 100 | 100 |
| Whitetex | 175 | 87,5 | 87,5 | 87,5 |
| Chaux sulfatée | - | 87,5 | - | - |
| Craie OMYA BSH | - | - | 87,5 | - |
| Craie OMYA Violette | - | - | - | 87,5 |
| Plaxene 6110 | 60 | 60 | 60 | 60 |
| ZnO | 5 | 5 | 5 | 5 |
| Acide Stéarique | 1 | 1 | 1 | 1 |
| Soufre | 2 | 2 | 2 | 2 |
| Vulcafor 2 | 5 | 5 | 5 | 5 |

| PROPRIETES | | | | |
|---|---|---|---|---|
| | | | | |
| Temps de Vulcanisation Rhéomètre T90,(180°C) | 6mn | 2mn 54s | 4mn 54s | 5mn 40s |
| Courbe Vulcanisation | | | | |
| Couple Mini (en Nm) | 8 | 9 | 6 | 7 |
| Couple Maxi | 67 | 55 | 52 | 63 |
| Résistance rupture (MPa) | 6,3 | 4,7 | 3,6 | 2,3 |
| Allongement rupture (%) | 480 | 640 | 450 | 380 |
| Module 100% (MPa) | 2,2 | 1,2 | 1,2 | 1,2 |
| Module 300% (MPa) | 4 | 2 | 2,4 | 1,9 |
| Dureté Internationale | 58 | 52 | 53 | 55 |

| | | | | |
|---|---|---|---|---|
| * Comparatif | | | | |

Ce tableau montre qu'avec une dureté légèrement inférieure à celle de la Composition D, contenant seulement la charge renforçante WHITETEX, la composition E, contenant une quantité de charge renforçante deux fois plus faible, additionnée de chaux sulfatée, présente un allongement supérieur à celui de toutes les autres compositions et une résistance à la rupture supérieure à celle des composition F et G additionnées d'une charge de craie.

On notera également l'excellent (faible) temps de vulcanisation de la composition E contenant de la chaux sulfatée.

### EXEMPLE 3

Cet exemple vise à étudier l'incidence de l'addition de chaux sulfatée sur la vulcanisation des élastomères.

Dans un premier essai, on a réalisé deux compositions d'élastomère H et J, contenant respectivement de la chaux sulfatée CS1, dont les caractéristiques ont été données ci-dessus, et une craie sulfatée CS2, dont les caractéristiques sont les suivantes :
- Masse volumique apparente : 0,71 g/cm³,
- Composition (% en masse) :
   * H₂O : 0,5,
   * Ca(OH)₂ : 12,3,
   * Ca SO₄ : 41,5,
   * Ca CO₃ : 4,8,
   * CaO : 40,9.

Des essais ont été effectués en faisant varier les quantités de soufre et d'activateur de vulcanisation de ces compositions.

Les caractéristiques de celles-ci et les résultats des essais effectués apparaissent dans le Tableau III ci-après.

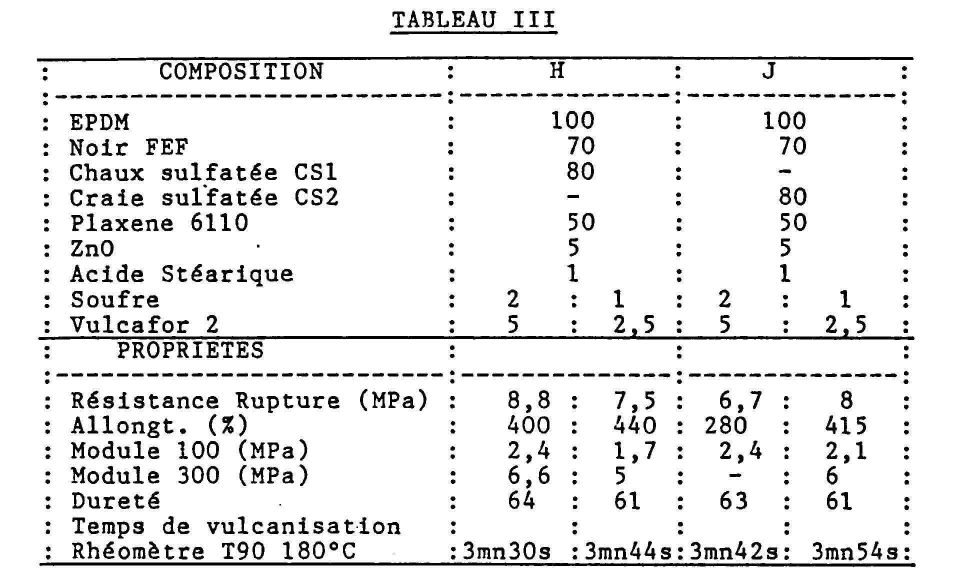

Il ressort de ces essais qu'il est possible de diviser par deux les quantités utilisées de soufre et d'accélérateur de vulcanisation (VULCAFOR 2), sans augmenter de façon appréciable la durée de vulcanisation.

On a de nouveau réalisé trois compositions K,L,M, d'élastomère, comprenant une même quantité de chaux sulfatée CS1, mais des quantités variables de soufre et d'accélérateur de vulcanisation.

Les teneurs de ces compositions et les résultats des essais effectués apparaissent dans le Tableau IV ci-après.

**TABLEAU IV**

| COMPOSITION | K | L | M |
|---|---|---|---|
| EPDM | 100 | 100 | 100 |
| Chaux sulfatée CS1 | 600 | 600 | 600 |
| Plaxene 6110 | 200 | 200 | 200 |
| ZnO | 5 | 5 | 5 |
| Acide stéarique | 1 | 1 | 1 |
| Stearate de Zinc | 10 | 10 | 10 |
| Soufre | 2 | 1 | 1 |
| Vulcafor 2 | 5 | 2,5 | 5 |

| PROPRIETES | | | |
|---|---|---|---|
| Résis. Rup (MPa) | 1,4 | 1,5 | 1,5 |
| Allongt Rupt. (%) | 700 | 750 | 800 |
| Module 100 (MPa) | 0,5 | 0,6 | 0,7 |
| Dureté DI | 45 | 42 | 36 |
| Temps de Vulcanisation T90 180°C (mn ) | 1mn 48s | 4mn 9s | 3mn 11s |
| Courbes Rhéométriques | | | |
| Couple mini Nm | 1,58 | 1,47 | 1,32 |
| Couple maxi | 20,76 | 20,54 | 23,13 |

Les résultats de ce Tableau montrent que, si l'on divise par deux soit la seule quantité de soufre utilisée (Composition M), soit la quantité de soufre et la quantité d'accélérateur de vulcanisation (Composition L), on obtient pratiquement les mêmes couples à partir des courbes rhéométriques et que seule la durée de vulcanisation est augmentée.

On notera la très grande quantité de chaux sulfatée utilisée dans les compositions K,L et M (600 parties en poids pour 100 parties de gomme). Il n'est pas possible d'effectuer un essai comparatif avec des charges de calcaire du commerce, car ces charges ne permettent pas de réaliser des compositions à taux de charge aussi élevé avec le même taux de plastifiant.

Les essais décrits dans les Exemples ci-dessus montrent donc clairement qu'il est possible de substituer de la chaux sulfatée aux charges inertes dans les compositions d'élastomères, et que cette substitution se traduit par un effet avantageux sur les propriétés mécaniques et sur l'aptitude à la vulcanisation de ces compositions.

La chaux sulfatée se présente donc comme un substitut très avantageux des charges usuelles des polymères.

## Revendications

1. Utilisation comme charge, dans une composition d'élastomère vulcanisable, d'une chaux sulfatée provenant de la désulfuration par voie sèche des fumées et comprenant en % en poids, entre 40 et 80% de sulfate de calcium, entre 10 et 50% de chaux vive, entre 0 et 10% de carbonate de calcium et entre 0 et 15% de chaux éteinte, sa granulométrie étant comprise entre 1 et 100. 10⁻⁶ m et sa granulométrie moyenne entre 2 et 40. 10⁻⁶ m, tandis que sa masse volumique apparente est comprise entre 0,35 et 0,80 g/cm³.

2. Utilisation selon la revendication 1, caractérisée en ce que la chaux sulfatée est incorporée dans la composition d'élastomère en une quantité de 100 à 1000 parties en poids pour 100 parties d'élastomère.

3. Utilisation selon l'une des revendications 1 et 2, caractérisée en ce que l'élastomère est un éthylène propylène diène monomère (EPDM) ou un caoutchouc styrène-butadiène (SBR).

4. Composition d'élastomère vulcanisée, comportant, comme charge dispersée, des particules d'une chaux sulfatée provenant de la désulfuration par voie sèche des fumées et comprenant en % en poids, entre 40 et 80% de sulfate de calcium, entre 10 et 50% de chaux vive, entre 0 et 10% de carbonate de calcium et entre 0 et 15% de chaux éteinte, sa granulométrie étant comprise entre 1 et 100. 10⁻⁶ m et sa granulométrie moyenne entre 2 et 40. 10⁻⁶ m, tandis que sa masse volumique apparente est comprise entre 0,35 et 0,80 g/cm³.

5. Composition d'élastomère vulcanisée selon la revendication 4, caractérisée en ce que la chaux sulfatée est incorporée dans la composition d'élastomère en une quantité de 100 à 1000 parties en poids pour 100 parties d'élastomère.

6. Composition d'élastomère vulcanisée selon l'une des revendications 4 et 5, caractérisée en ce que l'élastomère est un éthylène propylène diène monomère (EPDM) ou un caoutchouc styrène-butadiène (SBR).

## Patentansprüche

1. Verwendung eines von der trockenen Rauchgasentschwefelung stammenden sulfatierten Kalkes, welcher zwischen
40 und 80 Gewichtsprozent Calciumsulfat
10 und 50 Gewichtsprozent gebrannten Kalk
0 und 10 Gewichtsprozent Calciumcarbonat
0 und 15 Gewichtsprozent gelöschten Kalk
enthält, wobei seine Korngröße zwischen 1 und 100·10⁻⁶ m und seine mittlere Korngröße zwischen 2 und 40·10⁻⁶ m liegt, während seine Schüttdichte zwischen 0,35 und 0,80 g/cm³ liegt, als Füllstoff in einer vulkanisierbaren Elastomermischung.

2. Verwendung nach Anspruch 1, dadurch gekennzeichnet, daß der sulfatierte Kalk in die Elastomermischung in einer Menge von 100 bis 1000 Gewichtsteilen je 100 Elastomerteilen eingebracht wird.

3. Verwendung nach Anspruch 1 oder 2, dadurch gekennzeichnet, daß es sich beim Elastomeren um ein Äthylen/Propylen/Dien-Terpolymeres ( EPDM ) oder um einen Styrol/Butadien-Kautschuk ( SBK ) handelt.

4. Vulkanisierte Elastomermischung, die als dispergierten Füllstoff Teilchen eines von der trockenen Rauchgasentschwefelung stammenden sulfatierten Kalkes aufweist, welcher zwischen
40 und 80 Gewichtsprozent Calciumsufat
10 und 50 Gewichtsprozent gebrannten Kalk
0 und 10 Gewichtsprozent Calciumcarbonat
0 und 15 Gewichtsprozent gelöschten Kalk
enthält, wobei seine Korngröße zwischen 1 und 100·10⁻⁶ m und seine mittlere Korngröße zwischen 2 und 40·10⁻⁶ m liegt, während seine Schüttdichte zwischen 0,35 und 0,80 g/cm³ liegt.

5. Vulkanisierte Elastomermischung nach Anspruch 4, dadurch gekennzeichnet, daß der sulfatierte Kalk in die Elastomermischung in einer Menge von 100 bis 1000 Gewichtsteilen je 100 Elastomerteilen eingebracht ist.

6. Vulkanisierte Elastomermischung nach Anspruch 4 oder 5, dadurch gekennzeichnet, daß es sich beim Elastomeren um ein Äthylen/Propylen/Dien-Terpolymeres ( EPDM ) oder um einen Styrol/Butadien-Kautschuk ( SBK ) handelt.

## Claims

1. Use as a charge, in a vulcanisable elastomeric composition, of a sulphated lime originating from the desulphurisation of flue gases in a dry process and comprising in % by weight, between 40 and 80 % of calcium sulphate, between 10 and 50 % of quicklime, between 0 and 10 % of calcium carbonate and between 0 and 15 % of slaked lime, its particle size distribution being between 1 and 100. 10⁻⁶ m and its mean particle size distribution being between 2 and 40. 10⁻⁶ m, whereas its apparent mass density is between 0.35 and 0.80 g/cm³.

2. Use according to claim 1, characterised in that the sulphated lime is incorporated into the elastomeric composition in a quantity of from 100 to 1000 parts by weight per 100 parts of elastomer.

3. Use according to either of claims 1 and 2, characterised in that the elastomer is an ethylene propylene diene monomer (EPDM) or a styrene-butadiene rubber (SBR).

4. A vulcanised elastomeric composition, comprising, as dispersed charge, particles of a sulphated lime originating from the desulphurisation of flue gases in a dry process and comprising in % by weight, between 40 and 80 % of calcium sulphate, between 10 and 50 % of quicklime, between 0 and 10 % of calcium carbonate and between 0 and 15 % of slaked lime, its particle size distribution being between 1 and 100. 10⁻⁶ m and its mean particle size distribution being between 2 and 40. 10⁻⁶ m, whereas its apparent mass density is between 0.35 and 0.80 g/cm³.

5. A vulcanised elastomeric composition according to claim 4, characterised in that the sulphated lime is incorporated into the elastomeric composition in a quantity of from 100 to 1000 parts by weight per 100 parts of elastomer.

6. A vulcanised elastomeric composition according to either of claims 4 and 5, characterised in that the elastomer is an ethylene propylene diene monomer (EPDM) or a styrene-butadiene rubber (SBR).
